# EUROPÄISCHE PATENTSCHRIFT

(11) **EP 1 209 392 B1**
(45) Veröffentlichungstag und Bekanntmachung des Hinweises auf die Patenterteilung: **25.01.2006**
(21) Anmeldenummer: 01125033.9
(22) Anmeldetag: 20.10.2001
(51) Int. Cl.: F16K 15/16

(54) **Rückschlagventil**
Check valve
Clapet non-retour

(30) Priorität: 15.11.2000 DE 10056690
(43) Veröffentlichungstag der Anmeldung: 29.05.2002
(73) Patentinhaber: MAN NUTZFAHRZEUGE AG, 80995 München (DE); Elring Klinger AG, 72581 Dettingen (DE)
(72) Erfinder: Möller, Heribert, Dipl.-Ing., 91623 Sachsen (DE); Schweizer, Peter, 72661 Grafenberg (DE)

(56) Entgegenhaltungen:
- GB-A- 395 591
- GB-A- 1 371 919
- US-A- 4 373 882
- PATENT ABSTRACTS OF JAPAN vol. 012, no. 010 (M-658), 13. Januar 1988 (1988-01-13) & JP 62 171572 A (SHARP CORP), 28. Juli 1987 (1987-07-28)

## Beschreibung

Die Erfindung bezieht sich auf ein Rückschlagventil gemäß dem Gattungsbegriff des Patentanspruches 1.

Rückschlagventile haben die Aufgabe ein Medium nur in einer Richtung durchzulassen, dagegen in der Gegenrichtung zu stoppen. Sie bestehen im wesentlichen aus einem Gehäuse mit Ein- und Auslaßöffnungen und einem Ventil, welches unter Überdruck gegen die Rückstellkraft einer Feder oder dergleichen öffnet und bei Abbau des Überdruckes durch die Feder schließt und den Rückfluß des Mediums sperrt.

Aus der US 4 373 882 ist ein Kompressor mit einem derartigen Rückschlagventil bekannt, wobei das Rückschlagventil aus einem Trägerblech und einem Federblech mit Federzungen besteht. Trägerblech und Federblech sind durch Punktschweißen verbunden und in einer Ausnehmung im Kompressor so angeordnet, dass das Trägerblech gegenüber dem Federblech eine Aufwölbung aufweist, die als die Öffnungsbewegung der Federzungen begrenzender Anschlag dient. Die Einlassöffnungen mit denen die Federzungen in Wirkverbindung stehen sind Teil des Kompressors.

Weiter ist aus der GB 395 591 ein Kompressor bekannt, der eine Ventilplatte mit Einlass- und Auslassöffnungen aufweist. An den beiden Flachseiten der Ventilplatte sind Federbleche befestigt, aus denen jeweils Federzungen freigeschnitten sind. An einem der Federbleche ist darüber hinaus ein zungenförmiger Anschlag befestigt, der die Bewegung der Federzunge 25 begrenzt.

Rückschlagventile sind relativ teuer und bei Anwendung in Massenartikeln, wie sie Verbrennungsmotoren darstellen, von den Kosten her gesehen kaum tragbar.

Der Erfindung liegt die Aufgabe zugrunde, Rückschlagventile mit minimalem Fertigungsaufwand zu realisieren.

Gelöst wird diese Aufgabe durch die kennzeichnenden Merkmale des Patentanspruches 1.

Die erfindungsgemäße Bäuweise erfordert minimalen Fertigungs- und Materialaufwand. Zudem ist der Bauraum ebenfalls auf ein Minimum reduziert. Bei der Anwendung solcher Rückschlagventile zur Abgasrückführung in Brennkraftmaschinen ist der Bauraum oftmals von entscheidender Bedeutung für die Anwendbarkeit.

Vorteilhafte Weiterbildungen des Rückschlagventils sind den Ansprüchen 2 bis 4 zu entnehmen.

Ein Ausführungsbeispiel des Rückschlagventils ist anhand von Zeichnungen dargestellt. Es zeigt:
- Fig. 1: eine druckseitige Ansicht des Rückschlagventils, also in Durchlassrichtung gesehen
- Fig. 2: eine Ansicht aus einer Richtung entgegen dem Durchlass gesehen
- Fig. 3: eine Ansicht des aus Stahlblech geformten Ventils, welches zwischen den in den Fig. 1 und 2 dargestellten Bleichteiten eingespannt wird
- Fig. 4: einen Schnitt IV-IV nach Fig. 1 durch das fertig montierte Rückschlagventil

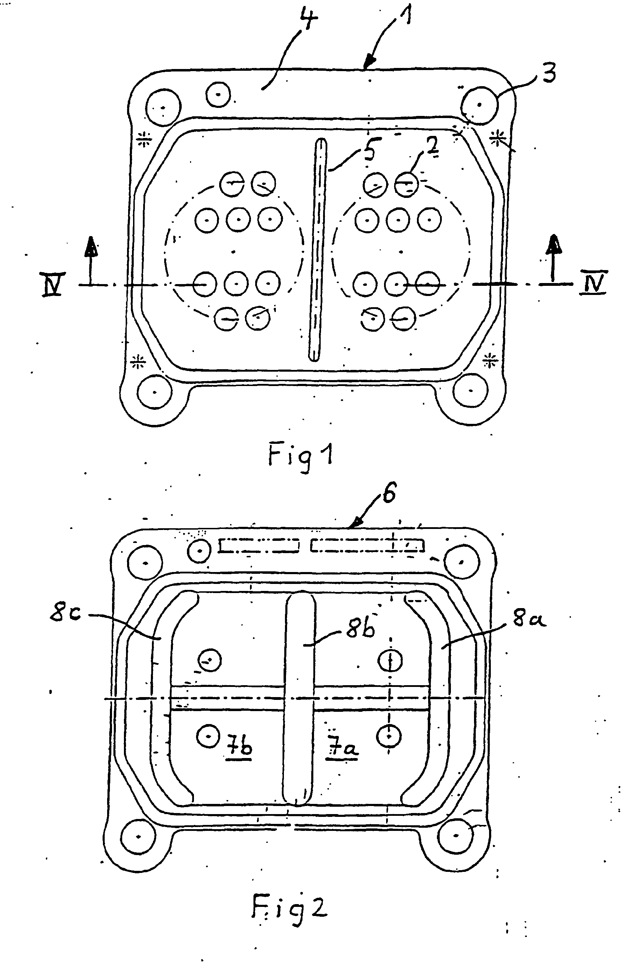

Das erfindungsgemäße Rückschlagventil entsteht durch Zusammenbau der in den Figuren 1 bis 3 gezeigten Einzelteile 1, 6, 9. Fig. 4 zeigt das fertigmontierte Rückschlagventil.

In Fig. 1 ist ein erstes Blechteil 1 dargestellt, welches den druckseitigen Einlass des Rückschlagventils bildet. Das Medium kann unter Überdruck durch die Bohrungen 2 in Richtung der Zeichenebene einströmen. Die in den Ecken des Blechteils 1 angeordneten Bohrungen 3 dienen nach dem Zusammenbau der Verspannung zwischen den Rohranschlussflanschen. Das Blechteil 1 ist im wesentlichen plan, so dass der umlaufende Randbereich 4 im Einbauzustand zugleich die Dichtfläche bildet. Die hier dargestellte Sicke 5 dient bei Verwendung zur Abgasrückführung bei mehrzylindrigen Motoren der Trennung der Abgasfluten.

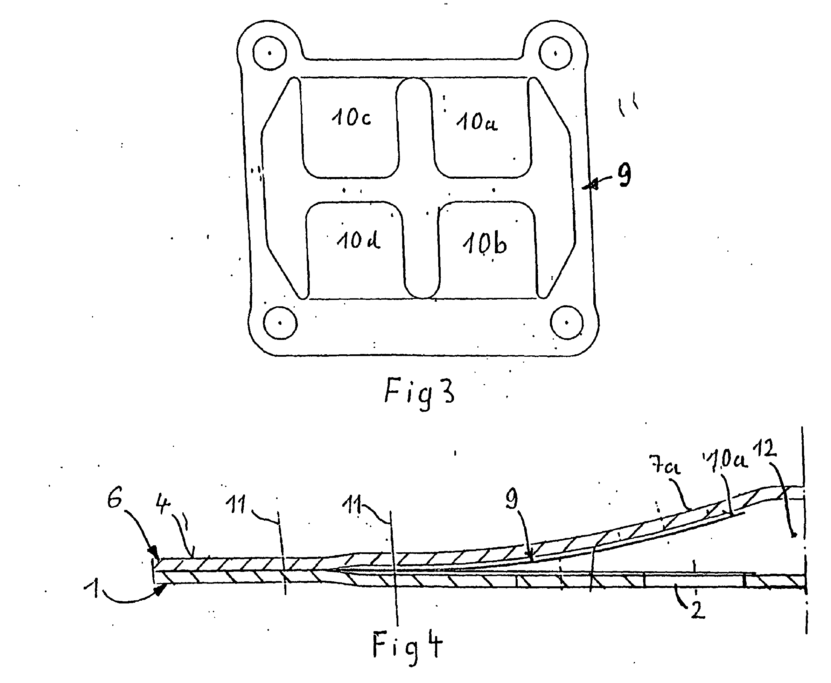

Fig. 2 zeigt ein zweites Blechteil 6, welches von der Abströmseite her, also in Sperrrichtung gesehen dargestellt ist. Die Umrandung des Blechteils 6 ist deckungsgleich mit dem Blechteil 1. Um einen Anschlag für die Ventilzungen 10a-10d (Fig. 3) zu haben, sind zwei Aufwölbungen 7a, 7b vorgesehen, deren Funktion und Gestaltung aus Fig. 4 hervorgeht. Bei Anwendung in Motoren mit einer Abgasflut genügt nur eine Aufwölbung 7a und zwei Ventilzungen 10a, 10b. Die Abströmung des Mediums kann über Längsschlitze 8a-8c erfolgen, welche im Blechteil 6 angeordnet sind.

Fig. 3 zeigt das eigentliche Ventil 9, welches aus einem dünnen, elastischen Stahlblech besteht. Die Umrandung ist wiederum deckungsgleich mit den Blechteilen 1 und 6. Im dargestellten Ausführungsbeispiel weist das Ventil 9 vier Ventilzungen 10a-10d auf, welche unter der Wirkung von Überdruck öffnen wie nachfolgend unter Fig. 4 näher erläutert wird.

Fig. 4 zeigt einen Schnitt IV-IV aus Fig. 1. Da vollkommene Symmetrie vorliegt, ist nur eine Hälfte dargestellt. Die Montage des Rückschlagventils erfolgt durch Aufeinanderschichten der Blechteile 1, 6, wobei das Ventil 9 zwischen die Blechteile 1, 6 eingespannt wird. Zur Befestigung der Teile 1, 6, 9 werden über die Umfangsfläche 4 (Fig. 1) verteilte Punktschweißungen 11 vorgenommen. Wird das Rückschlagventil mit Überdruck in der durch Pfeil gekennzeichneten Richtung beaufschlagt, so wird über die im Blechteil 1 vorhandenen Bohrungen 2 die Ventilzunge, beispielsweise 10a angehoben, bis sie an der Aufwölbung 7a zum Anliegen kommt. Diese Aufwölbung 7a ist in Fig. 2 in der Ansicht dargestellt. Gleiches gilt für die Ventilzungen 10b bis 10c, die an den Aufwölbungen 7a, 7b zum Anschlag kommen.

Das Medium, beispielsweise Abgas kann nun über die Bohrungen 2 in den Raum 12 zwischen dem Blechteil 1 und der Aufwölbung 7a und den Längsschlitzen 8a, 8b (Fig. 2) abströmen und wird der Ladeluftleitung zugeführt.

Was hier am Beispiel der Ventilzunge 10a ausgeführt ist, gilt natürlich auch für die symmetrisch ausgeführten Ventilzungen 10b, 10c, 10d.

## Patentansprüche

1. Rückschlagventil, bestehend aus einem Gehäuse mit Ein- und Auslassöffnungen und einem Ventil, welches unter Einwirkung von Druck in einer Richtung öffnet, jedoch in der Gegenrichtung sperrt und bei dem die Öffnung des Ventils durch einen Anschlag begrenzt wird, wobei das das Öffnen und Schließen vollziehende Element wenigstens eine federnde Ventilzunge (10a - 10c) ist und ein dem Abströmbereich zugeordnetes Blechteil (6) im Bereich der Ventilzunge (10a - 10c) mindestens eine Aufwölbung (7a, 7b) aufweist, derart, dass die Aufwölbung (7a, 7b) als Anschlag für die Ventilzunge (10a - 10c) fungiert, **dadurch gekennzeichnet, dass** das Gehäuse aus zwei im wesentlichen planparallelen Blechteilen (1, 6) gebildet wird, dass zwischen diesen Blechteilen (1, 6) ein als Ventil (9) wirkendes dünnes Stahlblech eingespannt ist, wobei das Ventil (9) mindestens eine Ventilzunge (10a - 10c) aufweist, sowie die Blechteile (1, 6) und das dazwischen liegende Ventil (9) fest miteinander verbunden sind und der Randbereich (4) der Blechteile (1, 6) zugleich als Dichtung ausgebildet ist.

2. Rückschlagventil nach Anspruch 1, **dadurch gekennzeichnet, daß** die feste Verbindung der Blechteile (1, 6) durch Punktschweißungen (11) erfolgt.

3. Rückschlagventil nach den Ansprüchen 1, 2, **dadurch gekennzeichnet, dass** das Ventil (9) mit seinen Ventilzungen (10a - 10d) aus dünnem Stahlblech ausgeführt ist.

4. Rückschlagventil nach den Ansprüchen 1 bis 3, **dadurch gekennzeichnet, dass** die Einlassöffnungen als Bohrungen (2) ausgebildet sind, die in dem dem Druck zugewandten Blechteil (1) angebracht sind und dass als Auslassöffnungen die Aufwölbungen (7a, 7b) dienen, welche zwischen Längsschlitzen (8a - 8c) im Blechteil (6) angeordnet sind.

## Claims

1. A non-return valve comprising a housing with inlet and outlet openings and a valve which opens in one direction under the effect of pressure, but blocks in the counter direction and in which the opening of the valve is delimited by a stop, the element executing the opening and closing action being at least one resilient valve tongue (10a - 10c) and a sheet-metal part (6) which is associated with the discharge region having, in the region of the valve tongue (10a - 10c), at least one bulge (7a, 7b) such that the bulge (7a, 7b) functions as a stop for the valve tongue (10 - 10c), **characterised in that** the housing is formed by two substantially plane-parallel sheet-metal parts (1, 6), **in that** a thin steel plate acting as a valve (9) is clamped between these sheet-metal parts (1, 6), the valve (9) having at least one valve tongue (10a - 10c), and the sheet-metal parts (1, 6) and the valve (9) located therebetween being fixedly connected to one another and the edge region (4) of the sheet-metal parts (1, 6) at the same time being constructed as a seal.

2. A non-return valve according to Claim 1, **characterised in that** the fixed connection of the sheet-metal parts (1, 6) is effected by spot weldings (11).

3. A non-return valve according to Claims 1, 2, **characterised in that** the valve (9) with its valve tongues (10a - 10d) is made of thin sheet steel.

4. A non-return valve according to Claims 1 to 3, **characterised in that** the inlet openings are constructed as bores (2) which are incorporated in the sheet-metal part (1) facing the pressure and **in that** the bulges (7a, 7b), which are arranged between longitudinal slits (8a - 8c) in the sheet-metal part (6), serve as outlet openings.

## Revendications

1. Clapet anti-retour comprenant un boîtier avec des ouvertures d'entrée et de sortie et une soupape qui, sous l'effet de la pression, s'ouvre dans une direction mais se bloque dans la direction inverse, au niveau duquel l'ouverture de la soupape est limitée par une butée, et l'élément effectuant l'ouverture et la fermeture est au moins une languette de soupape élastique (10a à 10c), et un élément en tôle (6) associé à la zone d'écoulement présente dans la zone de la languette de soupape (10a à 10c) au moins un bombement (7a, 7b), de telle sorte que le bombement (7a, 7b) fait fonction de butée pour la languette de soupape (10a à 10c),
**caractérisé en ce que**
le boîtier est formé par deux éléments en tôle (1,6) pour l'essentiel à faces planes et parallèles,
entre ces éléments en tôle (1,6) une tôle d'acier mince agissant comme soupape (9) est enserrée, la soupape (9) présentant au moins une languette de soupape (10a - 10c),
les éléments en tôle (1, 6) et la soupape (9) située entre ceux-ci sont reliés fixement les uns aux autres, et
la zone de bordure (4) des éléments en tôle (1, 6) sert en même temps de surface d'étanchéité.

2. Clapet anti-retour selon la revendication 1,
**caractérisé en ce que**
la liaison fixe des éléments en tôle (1, 6) est réalisée par des points de soudure (11).

3. Clapet anti-retour selon les revendications 1 à 2,
**caractérisé en ce que**
la soupape (9) et ses languettes de soupape (10a à 10d) sont réalisées en tôle d'acier mince.

4. Clapet anti-retour selon les revendications 1 à 3,
**caractérisé en ce que**
les ouvertures d'entrée sont les alésages (2) prévus dans l'élément en tôle (1) tourné vers la pression, et les bombements (7a, 7b) servent d'ouvertures de sortie disposées entre des fentes longitudinales (8a à 8c) dans l'élément en tôle (6).
